# EUROPÄISCHE PATENTSCHRIFT

(11) **EP 1 068 661 B1**
(45) Veröffentlichungstag und Bekanntmachung des Hinweises auf die Patenterteilung: **03.07.2002**
(21) Anmeldenummer: 99968270.1
(22) Anmeldetag: 25.08.1999
(51) Int. Cl.: H02J 9/06

(54) **NOTBETRIEBSEINRICHTUNG FÜR EINE VORRICHTUNG MIT EINEM ELEKTROMOTOR**
EMERGENCY OPERATION DEVICE FOR A FACILITY WITH AN ELECTRIC MOTOR
DISPOSITIF DE FONCTIONNEMENT D'URGENCE POUR UNE INSTALLATION DOTEE D'UN MOTEUR ELECTRIQUE

(30) Priorität: 02.09.1998 DE 19839878
(43) Veröffentlichungstag der Anmeldung: 17.01.2001
(73) Patentinhaber: Wittenstein Motion Control GmbH, 97999 Igersheim (DE)
(72) Erfinder: SPOHR, Hans-Hermann, D-75365 Calw (DE)
(74) Vertreter: Patentanwalts-Partnerschaft Rotermund + Pfusch
(86) Internationale Anmeldenummer: DE9902706
(87) Internationale Veröffentlichungsnummer: WO0013289

(56) Entgegenhaltungen:
- EP-A- 0 733 578
- GB-A- 2 017 346
- US-A- 5 285 029
- US-A- 5 414 336
- PATENT ABSTRACTS OF JAPAN vol. 1996, no. 1, 31. Januar 1996 (1996-01-31) & JP 07 232872 A (HITACHI), 5. September 1995 (1995-09-05)
- PATENT ABSTRACTS OF JAPAN vol. 18, no. 167 (E-1528), 22. März 1994 (1994-03-22) & JP 05 336787 A (TOSHIBA), 17. Dezember 1993 (1993-12-17)

## Beschreibung

Die Erfindung betrifft eine Notbetriebseinrichtung nach dem Oberbegriff des Anspruchs 1.

Eine Vorrichtung dieser Art kann beispielsweise ein Personenaufzug sein.

Eine gattungsgemäße Notbetriebseinrichtung hierfür ist aus EP-A-0 733 578 bekannt.
Jenes Dokument beschreibt eine Vorrichtung zum Antrieb eines Aufzugs mit einem permanentmagnet-erregten Synchronmotor. Bei jener Vorrichtung wird bei einem Ausfall der Stromversorgung eine alternative Energiequelle mit einer Hilfselektronik zugeschaltet, um den Motor auch im Notbetrieb als Aufzugsantrieb zu verwenden. Der Notbetrieb unterscheidet sich von dem Hauptbetrieb bei dieser Einrichtung lediglich durch die Zuschaltung einer Hilfsenergiequelle, mit der der Synchronmotor über eine Hilfselektronik beaufschlagt wird. Weitere Änderungen erfolgen bei einem Übergang von einem Haupt- in einen Notbetrieb nicht. Damit wird der Synchronmotor bei jener Einrichtung im Haupt- und Notbetrieb mit einem gleichen, für den Betrieb eines Synchronmotors grundsätzlich erforderlichen Rotorlagegeber betrieben.

Aus JP 07 23 28 72 A ist eine Notbetriebseinrichtung für eine Vorrichtung bekannt, die von einem Induktionsmotor, das heißt einem Asynchronmotor, angetrieben wird, welcher von einem Hauptstrom bestromt wird. Bei Notbetrieb der Vorrichtung arbeitet der Induktionsmotor mit einer Hilfselektronik. Bei jener Einrichtung liegt mit dem Induktionsmotor eine gegenüber dem gattungsgemäßen Synchronmotor funktionell unterschiedliche Motorart vor, was auch bezüglich der in beiden Fällen vorliegenden Haupt- und Hilfselektronik gilt. Ein dort vorhandener einziger Drehzahlsensor dient lediglich dazu, bei einem Übergang in den Notbetrieb den vorausgegangenen Hauptbetriebszustand während des Wechsels auf die Hilfselektronik zu erhalten. Im Notbetrieb selbst hat dieser Drehzahlsensor keine Funktion mehr.

Die Erfindung beschäftigt sich mit dem Problem, mit einer gattungsgemäßen Einrichtung die Sicherheit eines mit einer gattungsgemäßen Einrichtung erzielbaren Notbetriebes sowie dessen Aktivierung zu erhöhen, bei einem gleichzeitig möglichst einfachen, das heißt preiswerten Aufbau der Einrichtung.

Gelöst wird dieses Problem durch eine gattungsgemäße Einrichtung mit den kennzeichnenden Merkmalen des neuen Anspruchs 1.

Zweckmäßige Ausgestaltungen sind Gegenstand der Unteransprüche.

Ein besonderer Vorteil der Erfindung besteht darin, daß durch das Vorsehen zweier getrennter Rotorlagegeber für die Haupt- und die Hilfselektronik mit zugehörigen unterschiedlichen, voneinander unabhängigen Regelkreisen und einem Umschalter die Vorrichtung einen Notbetrieb in mehrfacher Hinsicht sicherstellt und zwar gegen einen Ausfall des Hauptstromnetzes, gegen einen Ausfall der Hauptelektronik einschließlich eines Kurzschlusses in den Zuleitungen bis zu dem Umschalter und zusätzlich noch gegen einen Ausfall des im Hauptbetrieb arbeitenden Rotorlagegebers. Außerdem entfallt eine zusätzliche Fehlerquelle beim Umschalten, die bei nur einem einzigen Rotorlagegeber vorhanden wäre. Somit wird mit den erfindungsgemäßen Merkmalen insgesamt die Zuverlässigkeit eines Notbetriebs erhöht.

Ein weiterer Vorteil der erfindungsgemäßen Ausführung besteht darin, daß unterschiedliche Rotorlagegeber eingesetzt werden können und zwar ein kostenaufwendiger, äußerst funktionsgenauer Rotorlagegeber in der Form eines Resolvers für den Hauptbetrieb und ein zwar funktionssicherer, aber weniger funktionsgenauer Rotorlagegeber für den Notbetrieb. So kann für den Notbetrieb beispielsweise ein äußerst preisgünstig einsetzbares Hallelement eingesetzt werden.

Durch die erfindungsgemäße Ausführung einer Notbetriebseinrichtung mit einem zusätzlichen, lediglich für den Notbetrieb bestimmten Rotorlagegeber kann der betreffende Motor bereits mit dem Notbetriebs-Rotorlagegeber grundsätzlich vorgerüstet sein, unabhängig davon, ob dieser Motor in der Praxis für einen Notbetrieb eingesetzt werden soll oder nicht. Damit können in der Praxis ohne eine Notbetriebseinrichtung arbeitende Motoren auf einfache Weise an eine nachträglich installierte Notbetriebseinrichtung angeschlossen werden. Es ist hierfür lediglich ein Wechsel in der Stromversorgung notwendig, die auf den Notbetriebs-Rotorlagegeber abgestimmt ist, ohne auf eine Einbindung des Hauptrotorlagegebers in die Notbetriebseinrichtung Rücksicht nehmen zu müssen.

Der Umschalter kann sowohl durch eine manuelle Betätigungseinrichtung als auch durch eine automatische Betätigungseinrichtung bedienbar ist, da dann der Notbetrieb automatisch oder handbetätigt aufgenommen werden kann. Die automatische Betätigungseinrichtung ist vorzugsweise ebenfalls an die alternative Energiequelle angeschlossen.

Die erfindungsgemäße Notbetriebseinrichtung ist vorzugsweise in einem Aufzugsantrieb, insbesondere einem Personenaufzugsantrieb, einsetzbar.

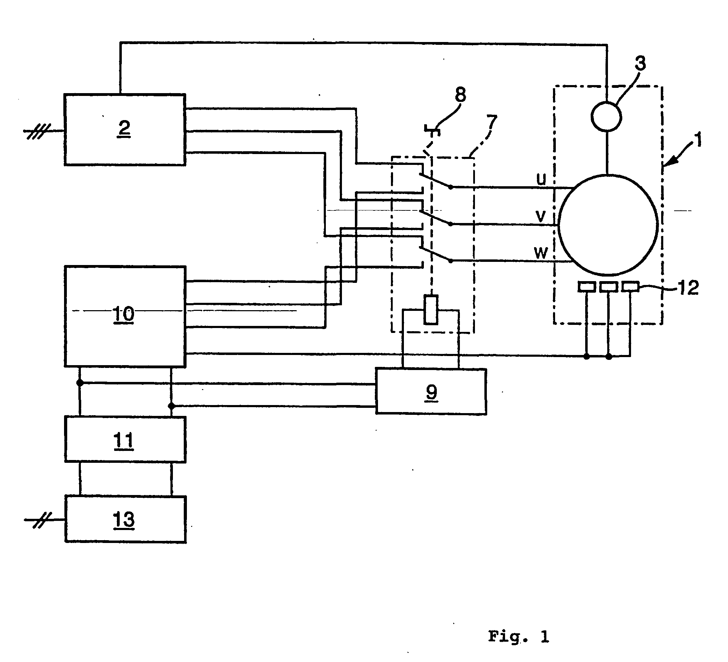

Im folgenden ist die Erfindung anhand eines in der Zeichnung dargestellten Ausführungsbeispiels näher erläutert. Es zeigt die einzige Figur
ein schematisches Blockschaltbild des Ausführungsbeispiels.

Ein permanentmagnet-erregter Synchronmotor 1 (AC-Servomotor) weist einen permanentmagnet-bestückten Rotor und einen den Rotor umgreifenden Stator auf. Eine an eine Drehstromquelle (3 x 380 V~) angeschlossene Hauptelektronik 2 (Servo-Controller) legt zu geeigneten Zeitpunkten die drei Phasen U, V, W an die Pole des Stators, um ein Drehfeld zu erzeugen, welches den Rotor in Drehung versetzt. Ein im Motor 1 angeordneter und an die Hauptelektronik 2 angeschlossener erster Rotorlagegeber 3, beispielsweise ein Resolver, stellt die absolute Winkelposition des Rotors in Bezug auf den Stator fest. Die Hauptelektronik 2 ermittelt aus dieser Winkelposition die geeigneten Zeitpunkte für die vorstehend beschriebene, geregelte Bestromung des Motors 1. Durch diese Rückkopplung kann auch das Drehmoment sowie die Drehzahl des Motors 1 geregelt werden.

In die Leitungen zwischen der Hauptelektronik 2 und dem Motor 1 ist ein Umschalter 7 eingebaut, der sowohl durch eine manuelle Betätigungseinrichtung 8 als auch durch eine automatische Betätigungseinrichtung 9 derart umgeschaltet werden kann, daß der Motor 1 von der Hauptelektronik 2 abgetrennt und an eine Hilfselektronik 10 angeschlossen wird. Die Hilfselektronik 10 wird von einer Batterie 11 mit Energie versorgt und legt im Falle einer Aktivierung anstelle der Hauptelektronik 2 zu geeigneten Zeitpunkten drei Phasen U, V, W an die Pole des Stators. Ein im Motor 1 angeordneter und an die Hilfselektronik 10 angeschlossener zweiter Rotorlagegeber 12, welcher drei Hallelement-Sensoren aufweist, stellt dann die Winkelposition des Rotors fest. Die Hilfselektronik 10 ermittelt entsprechend die geeigneten Zeitpunkte für die geregelte Motorbestromung. Der Aufbau der Hilfselektronik 10 ähnelt daher demjenigen der Hauptelektronik 2, kann aber auch vereinfacht sein, beispielsweise nur eine Drehmomentregelung und keine Drehzahlregelung vorsehen.

Im Falle des Anschlusses an die Hilfselektronik 10 kann das maximale Drehmoment des Motors 1 erreicht werden, während die Drehzahl des Motors 1 von der Höhe der Spannung der Batterie 11 abhängt. Diese Spannung kann beispielsweise 24 - 48 V betragen. Als Batterie 11 können beispielsweise aus dem Fahrzeugbau bekannte 12 V - Batterien in Serie geschaltet werden. Mittels eines an Wechselstrom (230 V∼) angeschlossenen Ladegerätes 13 wird die Batterie 11 geladen. Die Batterie 11 versorgt auch die automatische Betätigungseinrichtung 9.

Der Motor 1 ist als Antrieb in einen Aufzug, beispielsweise einen Personenaufzug, eingebaut. Bei einem Netzausfall, also bei einem Ausfall der die Hauptelektronik 2 versorgenden Drehstromquelle, oder bei einem Ausfall der Hauptelektronik 2 selber aufgrund eines Defektes wird die automatische Betätigungseinrichtung 9 aktiviert, welche den Umschalter 7 betätigt. Der Umschalter 7 trennt den Motor 1 von der Hauptelektronik 2 und verbindet ihn mit der Hilfselektronik 10. Der nunmehr im Notbetrieb arbeitende Motor 1 kann nun weiterhin den Aufzug antreiben, wenn auch langsamer. Dies ist für eine Notbefreiung wichtig. Mittels der Hilfselektronik 10 können die gleichen Funktionen realisiert werden wie mittels der Hauptelektronik 2.

Die Hilfelektronik 10 kann im Notbetrieb auch die Bremse des Aufzugs automatisch lösen, welche ansonsten handbetätigt gelöst werden müßte. Es ist möglich, die Hilfelektronik 10 so auszubilden, daß sie während des Notbetriebs die Wirksamkeit einer Bremseinrichtung steuern kann, das heißt die Bremse insbesondere anziehen und wieder lösen kann, beispielsweise in Abhängigkeit einer Überlast und/oder von der Geschwindigkeit des Aufzugs. Dies ist insbesondere dann günstig, wenn der Korb des Aufzugs besonders stark beladen ist, um.die alternative Energiequelle 11 zu schonen. Die Hilfselektronik 10 kann auch gegebenenfalls erkennen, wenn der Korb sich entgegen der gewünschten Befreiungsrichtung bewegt, und dann die Bremse anziehen.

## Patentansprüche

1. Notbetriebseinrichtung einer Vorrichtung, die von einem elektrischen Synchronmotor (1), insbesondere einem permanentmagnet-erregten Synchronmotor, angetrieben wird, welcher im Hauptbetrieb mit einem Hauptstrom über eine Hauptelektronik (2) mit einem Hauptstrom und bei Notbetrieb von einer alternativen Energiequelle (11) über eine Hilfselektronik (10) mit Notstrom unter jeweils Einsatz eines Motorlagegebers geregelt bestromt wird,
**gekennzeichnet durch:**
- unterschiedliche Regelkreise für den Haupt- und Notbetrieb mit jeweils unterschiedlichen Rotorlagegebern, nämlich einem ersten Rotorlagegeber (3) für den Hauptbetrieb und einem zweiten Rotorlagegeber (12) für den Notbetrieb und
- einen Umschalter (7), der bei Aufnahme des Notbetriebs bei einem Ausfall des Hauptstromes und/oder der Hauptelektronik (2) den Motor (1) von der Hauptelektronik (2) abtrennt und mit der Hilfselektronik (10) verbindet.

2. Notbetriebseinrichtung nach Anspruch 1,
**dadurch gekennzeichnet,**
**daß** der zweite Rotorlagegeber (12) wenigstens einen Hallelement-Sensor aufweist.

3. Notbetriebseinrichtung nach einem der vorherigen Ansprüche,
**dadurch gekennzeichnet,**
**daß** der Umschalter (7) sowohl durch eine manuelle Betätigungseinrichtung (8) als auch durch eine automatische Betätigungseinrichtung (9) bedienbar ist.

4. Notbetriebseinrichtung nach Anspruch 3,
**dadurch gekennzeichnet,**
**daß** die automatische Betätigungseinrichtung (9) an die alternative Energiequelle (11) angeschlossen ist.

5. Notbetriebseinrichtung nach Anspruch 3 oder 4,
**dadurch gekennzeichnet,**
**daß** die automatische Betätigungseinrichtung (9) sowohl bei einem Ausfall der Energieversorgung der Hauptelektronik (2) als auch bei einem Ausfall der Hauptelektronik (2) aktiviert wird.

6. Notbetriebseinrichtung nach einem der vorhergehenden Ansprüche,
**dadurch gekennzeichnet,**
**daß** mit der Hilfselektronik (10) eine vorhandene Aufzugsbremse lastabhängig steuerbar ist.

7. Aufzugsantrieb, insbesondere Personenaufzugsantrieb, mit einer Notbetriebseinrichtung nach einem der vorherigen Ansprüche.

## Claims

1. Emergency operation device for a facility driven by an electric asynchronous motor (1), in particular a synchronous motor excited by a permanent magnet, which is regulated and supplied by a main electronic unit (2) with a main current during main operation, and by an alternative power source (11) via an auxiliary electronic unit (10) with emergency power during emergency operation, both using a motor position sensor, **characterized by**:
- varying control circuits for main and emergency operation with respectively different rotor position sensors, namely a first rotor position sensor (3) for main operation , and a second rotor position sensor (12) for emergency operation, and
- a switch (7) that disconnects the motor (1) from the main electronic unit (2) when emergency operation begins given a main current and/or main electronic unit (2) failure, and connects it to the auxiliary electronic unit (10).

2. Emergency operation device according to claim 1, **characterized by** the fact that the second rotor position switch (12) has at least one Hall element sensor.

3. Emergency operation device according to one of the preceding claims, **characterized by** the fact that the switch (7) can be operated both by a manual actuator (8) and by an automatic actuator (9).

4. Emergency operation device according to claim 3, **characterized by** the fact that the automatic actuator (9) is connected to the alternative power source (11).

5. Emergency operation device according to claim 3 or 4, **characterized by** the fact that the automatic actuator (9) is activated both if power to the main electronic unit (2) is interrupted, and if the main electronic unit (2) fails.

6. Emergency operation device according to one of the preceding claims, **characterized by** the fact that an existing elevator brake can be controlled as a function of load using the auxiliary electronic unit (10).

7. Elevator drive, in particular passenger elevator drive, with an emergency operation device according to one of the preceding claims.

## Revendications

1. Dispositif de service d'urgence d'une installation qui est entraînée par un moteur synchrone (1) électrique, en particulier un moteur synchrone excité par aimant permanent, lequel en mode de service principal est alimenté de manière régulée par un courant principal par l'intermédiaire d'un système électronique principal (2) par un courant principal et en mode de service d'urgence par une source d'énergie d'alternative (11) par l'intermédiaire d'un système électronique auxiliaire (10) par du courant de secours en faisant intervenir respectivement un capteur de position de moteur,
**caractérisé par** :
- des boucles de régulation différentes pour le mode de service principal et d'urgence avec des capteurs de position de rotor respectivement différents, à savoir un premier capteur de position de rotor (3) pour le mode de service principal et un second capteur de position de rotor (12) pour le mode de service d'urgence et
- un commutateur (7) qui, dans le cas de la prise en charge du mode de service d'urgence lors d'une défaillance du courant principal et/ou une défaillance du système électronique principal (2), isole le moteur (1) du système électronique principal (2) et le relie au système électronique auxiliaire (10).

2. Dispositif de service d'urgence selon la revendication 1, **caractérisé en ce que** le second capteur de position de rotor (12) comporte au moins un capteur formant élément à effet Hall.

3. Dispositif de service d'urgence selon l'une des revendications précédentes, **caractérisé en ce que** le commutateur (7) peut être commandé aussi bien par un dispositif d'actionnement manuel (8) que par un dispositif d'actionnement automatique (9).

4. Dispositif de service d'urgence selon la revendication 3, **caractérisé en ce que** le dispositif d'actionnement automatique (9) est raccordé à la source d'énergie d'alternative (11).

5. Dispositif de service d'urgence selon l'une des revendications 3 ou 4, **caractérisé en ce que** le dispositif d'actionnement automatique (9) est activé aussi bien lors d'une défaillance de l'alimentation en énergie du système électronique principal (2) que dans le cas d'une défaillance du système électronique principal (2).

6. Dispositif de service d'urgence selon l'une des revendications précédentes, **caractérisé en ce qu'**un frein d'élévateur existant peut être commandé en fonction de la charge par le système électronique auxiliaire (10).

7. Entraînement d'élévateur, en particulier entraînement d'ascenseur, comportant un dispositif de service d'urgence selon l'une des revendications précédentes.
